# DEMANDE DE BREVET EUROPEEN

(11) **EP 1 247 671 A1**
(43) Date de publication de la demande: **09.10.2002**
(21) Numéro de dépôt: 02290825.5
(22) Date de dépôt: 03.04.2002
(51) Int. Cl.: B60H 1/22, B60H 1/00

(54) **Procédé de chauffage d'un habitacle de véhicule à moteur et garnissage pour la mise en oeuvre du procédé**

(30) Priorité: 04.04.2001 FR 0104575
(71) Demandeur: Peugeot Citroen Automobiles SA, 92200 Neuilly sur Seine (FR)
(72) Inventeur: Druhen Charnaux, Yves, 78530 Buc (FR)
(74) Mandataire: Bentz, Jean-Paul

(57) **Abrégé**

L'invention concerne notamment un garnissage pour habitacle de véhicule à moteur, du type de ceux qui comprennent une couche porteuse (1).

Le garnissage de l'invention comprend en outre une couche chauffante (2) rendue solidaire de la couche porteuse (1), ainsi, éventuellement, qu'une couche réfléchissante et /ou isolante (3) et une couche de protection (4).

Application au chauffage par radiation d'un habitacle de véhicule automobile.

## Description

L'invention concerne, de façon générale, le domaine technique de la régulation thermique dans l'habitacle d'un véhicule.

Plus précisément, l'invention concerne un procédé de chauffage d'un habitacle de véhicule à moteur partiellement recouvert d'un garnissage.

La recherche d'une réduction de consommation d'énergie est un objectif aujourd'hui bien établi dans le domaine de l'industrie automobile, et, de fait, les rendements des véhicules automobiles ne cessent de s'améliorer.

Une des conséquences de cette situation est que l'énergie dissipée dans le liquide de refroidissement du moteur qui anime un véhicule récent peut d'ores et déjà être trop faible pour que l'habitacle de ce véhicule puisse être chauffé efficacement grâce à une circulation de ce liquide.

Une solution connue à ce problème consiste à rajouter un réchauffeur sur le circuit hydraulique de chauffage, ou sur la conduite d'air qui débouche dans l'habitacle.

L'invention repose néanmoins sur la mise en évidence de ce que cette solution connue conduit à un bilan énergétique perfectible.

Dans ce contexte, l'invention a précisément pour objet de proposer, notamment, un procédé de chauffage offrant un bilan énergétique sensiblement meilleur que celui du procédé connu.

A cette fin, le procédé de l'invention, par ailleurs conforme à la définition générique qu'en donne le préambule ci-dessus, est essentiellement caractérisé en ce qu'il comprend une première opération consistant au moins à chauffer une première partie du garnissage en la portant à une première température au moins égale à 25 degrés.

Ainsi, au lieu d'utiliser un mode de chauffage reposant intégralement sur un phénomène de convection, l'invention propose d'avoir au moins partiellement recours à un phénomène de radiation, cette approche permettant de réduire la perte d'énergie qui résulte d'une extraction rapide d'air chaud hors de l'habitacle.

La première opération peut aussi consister à chauffer au moins une seconde partie du garnissage en la portant à une seconde température au moins égale à 25 degrés et sélectivement différente de la première.

De préférence, chaque partie chauffée du garnissage est portée à une température au plus égale à 60 degrés.

L'invention représente un apport particulier, au plan du confort, dans le cas où l'une au moins des première et seconde parties de garnissage comprend un garnissage d'appuie-tête.

Dans le mode de réalisation préféré de l'invention, cette première opération est mise en oeuvre par effet Joule.

Le procédé de chauffage de l'invention peut aussi comprendre une seconde opération mise en oeuvre en plus de la première opération et consistant à assurer une circulation d'air chauffé dans l'habitacle.

Selon un second de ses aspects, l'invention concerne un garnissage destiné à habiller partiellement un habitacle de véhicule à moteur, comprenant au moins une première couche porteuse, et permettant de mettre en oeuvre le procédé précédemment défini, ce garnissage étant caractérisé en ce qu'il comprend en outre au moins une couche chauffante rendue solidaire de la première couche porteuse.

Pour augmenter le rendement thermique, le garnissage de l'invention peut comprendre en outre au moins une couche réfléchissante et / ou isolante, rendue solidaire de la couche chauffante.

La couche réfléchissante et / ou isolante peut être perforée pour assurer une certaine transparence à l'air et ne pas nuire à l'absorption acoustique, notamment dans le cas de garnissages acoustiques.

La couche chauffante comporte de préférence des résistances électriques, et peut comprendre un tissu chauffant.

Le garnissage de l'invention peut aussi comprendre une seconde couche porteuse, l'une des première et seconde couches porteuses constituant par exemple une couche de maintien mécanique, et l'autre couche porteuse constituant une couche de protection.

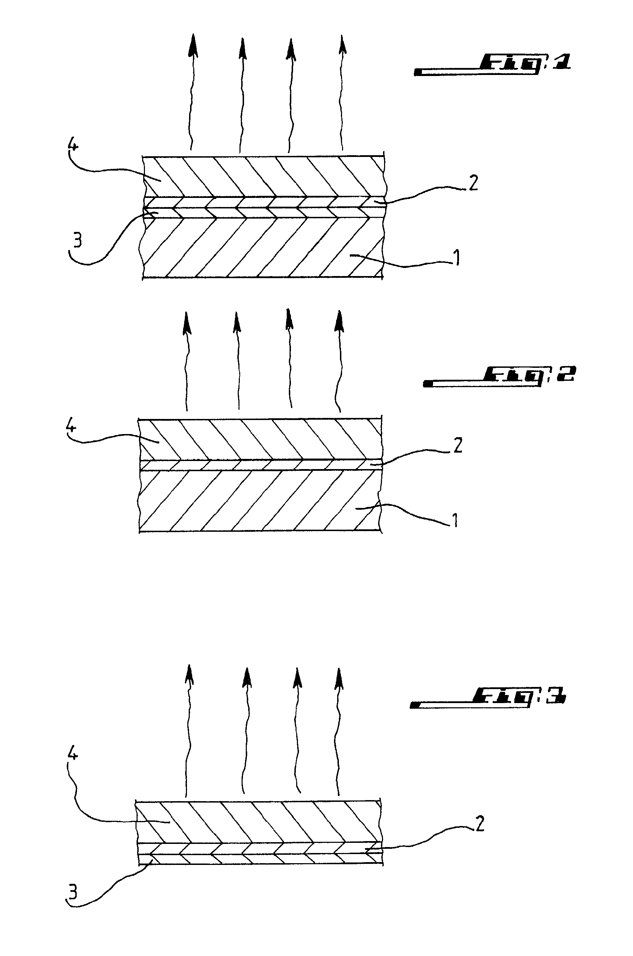

D'autres caractéristiques et avantages de l'invention ressortiront clairement de la description qui en est faite ci-après, à titre indicatif et nullement limitatif, en référence aux figures 1 à 3 annexées, qui sont des vues en coupe grossies d'un garnissage conforme à trois variantes possibles de mise en oeuvre de l'invention.

Le procédé de chauffage de l'invention s'applique principalement au chauffage d'un habitacle de véhicule à moteur partiellement recouvert d'un garnissage tel que celui qu'illustrent les figures.

En fait, l'invention peut être mise en oeuvre avec tous les éléments de garnissage qui tapissent ou équipent l'habitacle, et notamment le garnissage de pavillon, les garnissages de portes, de pieds milieu et de pieds avant, la moquette de plancher, les garnissages inférieurs de planches de bord, les appuie-tête de sièges, la tablette arrière et les pare-soleil.

Le procédé selon l'invention comprend au moins une première opération, qui consiste à porter une partie au moins du garnissage, utilisé pour sa mise en oeuvre, à une température au moins égale à 25 degrés et préférablement inférieure ou égale à 60 degrés, par exemple de l'ordre de 30 à 40 degrés.

Cette opération peut en fait consister à chauffer plusieurs parties du garnissage à des températures respectives indépendantes, donc éventuellement différentes les unes des autres, ces températures restant néanmoins de préférence comprises entre 25 et 60 degrés.

En pratique, cette première opération peut aisément être mise en oeuvre par effet Joule, c'est-à-dire par circulation d'un courant électrique dans un conducteur présentant une résistance notable à la circulation de ce courant.

Dans la mesure où il est indispensable, au moins périodiquement, de renouveler l'air dans l'habitacle pour y assurer un taux d'oxygène normal et le désembuage des vitres, le procédé de l'invention comprend une seconde opération, mise en oeuvre au moins de temps en temps en plus de la première opération, et qui consiste à assurer une circulation d'air chauffé dans l'habitacle.

L'invention présente de nombreux avantages.

Tout d'abord, elle permet de réduire les échanges thermiques par radiation entre l'habitacle et le corps de chaque occupant, ce qui réduit les dépenses énergétiques des occupants eux-mêmes et améliore leur sensation de confort par suppression de la sensation de paroi froide.

Dans la mesure où l'invention permet de réduire la température de l'air dans l'habitacle, les déperditions thermiques dues à l'extraction de l'air de l'habitacle sont réduites.

Dans la mesure où elle permet un chauffage sélectif de différentes parties du garnissage, l'invention permet à chaque occupant de régler sa propre température de confort.

Le procédé de chauffage de l'invention, au moins dans la mise en oeuvre de sa première opération, est totalement silencieux, puisqu'il n'implique aucun mouvement d'air.

Ce procédé de chauffage présente une inertie très faible, de sorte que son effet est ressenti par les occupants du véhicule dès les premières minutes de roulage.

Dans le cas particulier du chauffage de l'appuie-tête, le procédé de l'invention permet de stimuler par chauffage radiatif l'hypothalamus de l'occupant qui en bénéficie, ce qui réduit les besoins thermiques de ce dernier à sensation de confort égales (effet d'écharpe).

Les figures annexées représentent des variantes d'un garnissage utilisable pour la mise en oeuvre de ce procédé.

Ce garnissage, qui comprend de façon classique au moins une couche de maintien mécanique 1 ou une couche 4 formant revêtement de protection, comprend en outre une couche chauffante 2, qui est rendue solidaire de l'une au moins des couches 1 et 4 utilisée comme couche porteuse.

Pour augmenter le rendement thermique, ce garnissage comprend avantageusement une couche réfléchissante et / ou isolante 3, c'est-à-dire une couche conçue pour réfléchir les rayonnements infrarouge et / ou pour éviter leur transmission, et qui est rendue solidaire de la couche chauffante 2.

Dans le mode de réalisation illustré à la figure 1, le garnissage comprend, en profondeur, une couche 1 de maintien mécanique, et, en surface, une couche de protection 4, chacune de ces deux couches formant une couche porteuse pour la couche chauffante 2.

Dans ces conditions, la couche réfléchissante et /ou isolante 3 recouvre la couche de maintien mécanique 1, tandis que la couche chauffante 2 recouvre la couche réfléchissante et / ou isolante 3, la couche de protection 4 recouvrant quant à elle la couche chauffante 2.

Le mode de réalisation de la figure 2 ne se distingue du mode de réalisation de la figure 1 que par l'absence de la couche réfléchissante et / ou isolante 3, cette solution conduisant à un moins bon rendement thermique, mais à un coût de fabrication plus bas du garnissage.

Le mode de réalisation de la figure 3 se distingue du mode de réalisation de la figure 1 par l'absence de la couche profonde de maintien mécanique 1.

D'autres modes de réalisation sont néanmoins envisageables, et peuvent notamment être obtenus en supprimant la couche de protection 4 du mode de réalisation de la figure 1, ou en supprimant la couche réfléchissante et / ou isolante 3 du mode de réalisation de la figure 3.

La couche chauffante 2 peut être réalisée de plusieurs manières, et peut par exemple prendre la forme de fils conducteurs, formant des résistances électriques, déposés sur un support isolant, ou la forme de circuits imprimés sur un film thermoformable, ou encore la forme d'un tissu chauffant tel que connu par exemple du document de brevet FR 2 769 785.

Dans ce dernier cas, le tissu chauffant peut constituer lui-même la surface de protection externe du garnissage, les couches 2 et 4 étant alors confondues, conformément à un mode de réalisation déjà évoqué.

Enfin, la couche réfléchissante et / ou isolante 3 peut être perforée pour laisser le libre passage à l'air et / ou aux ondes sonores.

## Revendications

1. Procédé de chauffage d'un habitacle de véhicule à moteur partiellement recouvert d'un garnissage, **caractérisé en ce qu'**il comprend une première opération consistant au moins à chauffer une première partie du garnissage en la portant à une première température au moins égale à 25 degrés, et à chauffer au moins une seconde partie du garnissage en la portant à une seconde température au moins égale à 25 degrés et sélectivement différente de la première.

2. Procédé de chauffage suivant la revendication 1, **caractérisé en ce que** chaque partie chauffée du garnissage est portée à une température au plus égale à 60 degrés.

3. Procédé de chauffage suivant la revendication 1 ou 2, **caractérisé en ce que** l'une au moins des première et seconde parties de garnissage comprend un garnissage d'appuie-tête.

4. Procédé de chauffage suivant l'une quelconque des revendications précédentes, **caractérisé en ce que** la première opération est mise en oeuvre par effet Joule.

5. Procédé de chauffage suivant l'une quelconque des revendications précédentes, **caractérisé en ce qu'**il comprend une seconde opération mise en oeuvre en plus de la première opération et consistant à assurer une circulation d'air chauffé dans l'habitacle.

6. Garnissage pour la mise en oeuvre du procédé suivant l'une quelconque des revendications 1 à 5, ce garnissage comprenant au moins une première couche porteuse (1, 4), **caractérisé en ce qu'**il comprend en outre au moins une couche chauffante (2) rendue solidaire de la première couche porteuse (1, 4).

7. Garnissage suivant la revendication 6, **caractérisé en ce qu'**il comprend en outre au moins une couche réfléchissante et / ou isolante (3), rendue solidaire de la couche chauffante (2).

8. Garnissage suivant la revendication 7, **caractérisé en ce que** la couche réfléchissante et / ou isolante (3) est perforée.

9. Garnissage suivant l'une quelconque des revendications 6 à 8, **caractérisé en ce que** la couche chauffante (2) comporte des résistances électriques.

10. Garnissage suivant l'une quelconque des revendications 6 à 9, **caractérisé en ce que** la couche chauffante (2) comprend un tissu chauffant.

11. Garnissage suivant l'une quelconque des revendications 6 à 10, **caractérisé en ce qu'**il comprend une seconde couche porteuse (4, 1).

12. Garnissage suivant la revendication 11, **caractérisé en ce qu'**une (1) des première et seconde couches porteuses (1, 4) constitue une couche de maintien mécanique, et **en ce que** l'autre des première et seconde couches porteuses (1, 4) constitue une couche de protection (4).
